# EUROPÄISCHE PATENTSCHRIFT

(11) **EP 2 952 406 B1**
(45) Veröffentlichungstag und Bekanntmachung des Hinweises auf die Patenterteilung: **22.11.2017**
(21) Anmeldenummer: 15165992.7
(22) Anmeldetag: 30.04.2015
(51) Int. Cl.: B62B 1/14, B62D 63/06

(54) **TROLLEY UND ANHÄNGER**
TROLLEY AND TRAILER
CHARIOT ET REMORQUE

(30) Priorität: 15.05.2014 DE 102014106866
(43) Veröffentlichungstag der Anmeldung: 09.12.2015
(73) Patentinhaber: Jungheinrich Aktiengesellschaft, 22047 Hamburg (DE)
(72) Erfinder: Schröder, Henrik, 21423 Winsen-Roydorf (DE)
(74) Vertreter: Hauck Patentanwaltspartnerschaft mbB

(56) Entgegenhaltungen:
- DE-A1-102007 022 525
- DE-A1-102012 017 838
- DE-U1-202013 100 729
- DE-U1-202013 102 199

## Beschreibung

Die vorliegende Erfindung betrifft einen Trolley für die Verwendung in einem Anhänger sowie einen Anhänger für einen Trolley und ein System aus Trolley und Anhänger.

Ein Trolley ist ein mit Rollen oder Rädern versehenes Transporthilfsmittel, wie beispielsweise ein Rollwagen, eine Rollpalette oder dergleichen. Trolleys werden in der innerbetrieblichen Logistik eingesetzt, um Waren, Material und Baugruppen und dergleichen innerhalb des Betriebes zu transportieren und zur gewünschten Zeit an den gewünschten Ort zu bringen.

Anhänger, insbesondere Routenzuganhänger, werden in der innerbetrieblichen Logistik eingesetzt, um Trolleys zu transportieren. Der Anhänger wird häufig in einem Schleppverband, bestehend aus einem Schleppfahrzeug und mehreren, aneinander hängenden Anhängern eingesetzt. Einzelne Trolleys können in die Anhänger des Schleppverbandes ein- und wieder ausgeladen werden.

Grundsätzlich gibt es bei dem Aufbau der Anhänger zwei verschiedene Typen. Bei dem portalartig ausgebildeten Anhänger sind ein vorderer Anhängerabschnitt und ein hinterer Anhängerabschnitt über einen portalförmigen Rahmen miteinander verbunden. Diese Portalanhänger gestatten es, den zu transportierenden Trolley von beiden Seiten, bezogen auf eine quer zur Längsrichtung laufende Querrichtung, in den Anhänger einzuschieben und aus diesem wieder herauszuschieben. Dies erleichtert den praktischen Einsatz. Der zweite Typ von Anhänger besteht in der Regel aus einem E-förmigen Rahmen, der zu einer Seite, bezogen auf eine Querrichtung, das Einschieben und Herausschieben des Anhängers erlaubt. Der Vorteil der einseitig beladbaren Anhänger besteht darin, dass diese im Hinblick auf die zu transportierenden Trolleys keiner Höhenbeschränkung durch einen portalförmigen Rahmen unterliegen.

Bei den Anhängern, wie sie insbesondere bei Routenzügen eingesetzt werden, sind zwei Typen zu unterscheiden: Bei einem ersten Typ von Anhänger wird der Trolley mitgeführt. Dies bedeutet, der Trolley fährt eigenständig auf seinen Rollen oder Rädern und wird lediglich durch den Anhänger mitgeführt. Bei dem zweiten Typ ist der Anhänger dazu ausgebildet, den Trolley für den Transport anzuheben, so dass der Trolley mit seinen Rädern vom Boden freikommt. Der Vorteil des angehobenen Trolleys besteht darin, dass die Transportgeschwindigkeit nicht durch die Größe der Räder des Trolleys begrenzt ist, sondern das Verfahren ausschließlich über den Anhänger erfolgt.

Bei den letztgenannten Anhängern, die den Trolley in angehobener Position transportieren, ist zu unterscheiden, ob eine angetriebene Hubeinrichtung vorgesehen ist oder in welcher Form ein durch Muskelkraft getätigtes Anheben des Trolleys erfolgt.

Aus DE 20 2013 100 729 U1 ist ein Routenzuganhänger zum Transport von rollbaren Ladungsträgern bekannt geworden. Der Anhänger besitzt einen eine Ladungsträgeraufnahme einfassenden Rahmen mit einem quer zur Zugrichtung verlaufenden Querschenkel, der zwei quer zur Zugrichtung angeordnete Rollenleisten aufweist, auf die ein Ladungsträger zum Einbringen in die Ladungsträgeraufnahme aufschiebbar ist. Die Rollenleisten besitzen dabei eine Neigung, die vom freien Ende des Querschenkels fort ansteigt.

Der vorliegenden Erfindung liegt die Aufgabe zugrunde, einen Trolley sowie einen Anhänger zur Verfügung zu stellen, die es erlauben, den Trolley im angehobenen Zustand zu transportieren und mit möglichst einfachen Mitteln ein durch Muskelkraft getätigtes Anheben zu erzielen.

Die erfindungsgemäße Aufgabe wird durch einen Trolley mit den Merkmalen aus Anspruch 1, einen Anhänger mit den Merkmalen aus Anspruch 6 sowie ein System aus Anhänger und Trolley gemäß Anspruch 11 gelöst. Vorteilhafte Ausgestaltungen bilden den Gegenstand der Unteransprüche.

Der erfindungsgemäße Trolley ist vorgesehen und bestimmt für einen Anhänger, um in einem Routenzug oder einem Schleppverband in angehobenem Zustand mitgeführt zu werden. Der Trolley besitzt einen viereckigen Rahmen, der in seinen Ecken mit Rollen oder Rädern ausgestattet ist. Für eine Querrichtung ist an dem Rahmen auf einer Rahmenunterseite mindestens eine geneigt angeordnete Aufschiebeschiene vorgesehen. Die geneigte Aufschiebeschiene erstreckt sich über die bevorzugt gesamte Breite des Rahmens. Mit Hilfe der Aufschiebeschiene und deren Neigung kann der Trolley in einen Anhänger eingeschoben und über die geneigte Aufschiebeschiene angehoben werden. Erfindungsgemäß weist der Trolley zwei oder mehr Aufschiebeschienen mit entgegengesetzter Neigung auf. Die entgegengesetzte Neigung bewirkt, dass der Trolley in Querrichtung und entgegen der Querrichtung in einen Anhänger eingeschoben werden kann. Indem zwei oder mehr Aufschiebeschienen vorgesehen sind, kann der Trolley von beiden Seiten in Querrichtung in den Anhänger eingeschoben wird. Die Orientierung des Trolleys hierbei in oder entgegen der Querrichtung fällt nicht ins Gewicht.

In einer weiteren bevorzugten Ausgestaltung ist mindestens ein Paar von parallel zueinander und beabstandet voneinander angeordneten Aufschiebeschienen vorgesehen. Die Aufschiebeschienen eines Paares besitzen die gleiche vorbestimmte Neigung, die zudem gleich orientiert ist. Durch die Verwendung eines Paares von Aufschiebeschienen wird ein verkippsicheres Aufschieben deutlich erleichtert.

Eine weitere bevorzugte Ausgestaltung sieht vor, dass zwei Paare von Aufschiebeschienen an dem Trolley vorgesehen sind. Dabei besitzt ein erstes Paar von Aufschiebeschienen eine erste Neigung und das zweite Paar von Aufschiebeschienen eine zweite, der ersten Neigung entgegengesetzt, orientierte Neigung. Mit der Verwendung von zwei Paaren von Aufschiebeschienen, die eine entgegengesetzte Neigung besitzen, ist es möglich, den Trolley in seinen Querrichtungen in einen Anhänger einzuschieben.

Bevorzugt besitzen beide Paare von Aufschiebeschienen jeweils den gleichen Abstand zwischen ihren Aufschiebeschienen. Insofern sind die Paare von Aufschiebeschienen in ihrer Geometrie gleich.

In einer bevorzugten Ausgestaltung ist, bezogen auf eine Trolleylängsrichtung, eine erste Aufschiebeschiene des ersten Paares vor einer ersten Aufschiebeschiene des zweiten Paares und eine zweite Aufschiebeschiene des zweiten Paares vor einer zweiten Aufschiebeschiene des ersten Paares angeordnet. Diese Anordnung entspricht einer Anordnung, bei der jeweils eine Aufschiebeschiene eines Paares räumlich zwischen den Aufschiebeschienen des anderen Paares angeordnet ist. Vorzugsweise sind die Aufschiebeschienen beider Paare mittig an dem Trolley angeordnet und jedes Paar außermittig angeordnet. Diese Anordnung bewirkt, dass bei einer Drehung des Trolleys um 180° sich weder die Position noch die Orientierung der Aufschiebeschienen ändert. Der Trolley ist somit bei einer 180°-Drehung identisch in sich selbst überführt.

Die erfindungsgemäße Aufgabe wird ebenfalls durch einen Anhänger, insbesondere einen Routenzuganhänger mit einem E-förmigen Rahmen gelöst. Der E-förmige Rahmen besitzt zwei Außenschenkel und einen Mittelsteg. Der Mittelsteg weist mindestens eine sich in Querrichtung erstreckende Auffahrschiene mit einer vorbestimmten Neigung auf, die ausgehend vom freien Ende des Mittelstegs ansteigt. Über die Neigung der Auffahrschiene kann ein Trolley in eine angehobene Position auf den Anhänger geschoben werden. Wenn die Auffahrschiene an dem Anhänger eine Neigung besitzt, die der Neigung der Aufschiebeschiene an dem Trolley entspricht, kann der Trolley, in einer horizontalen Position verbleibend, auf den Anhänger geschoben werden.

Erfindungsgemäß besitzen die Auffahrschienen einen unterschiedlichen Abstand von einer Mittelposition zwischen den Außenschenkeln. Die Außenschenkel begrenzen seitlich den Aufnahmeraum für einen von dem Anhänger aufzunehmenden Trolley. Indem die Auffahrschienen einen unterschiedlichen Abstand von der Mittelposition besitzen, ist es möglich, bei einem Trolley mit mehreren Aufschiebeschienen stets eine vordefinierte Aufschiebeschiene auszuwählen, die mit der Aufschiebeschiene des Anhängers zusammenwirkt. Ist beispielsweise, bezogen auf die symmetrische Position eine Auffahrschiene weiter nach rechts oder links gegenüber der Mittelposition an dem Anhänger versetzt, so wird bei dem eingeschobenen Trolley stets die rechte bzw. linke Aufschiebeschiene in Kontakt mit der Auffahrschiene gelangen.

In einer bevorzugten Ausgestaltung besitzt der Anhänger beidseitig von seinem Mittelsteg jeweils eine Auffahrschiene, die die gleiche Neigung besitzt.

In einer bevorzugten Ausgestaltung sind die Aufschiebeschienen und/oder die Auffahrschienen mit Rollen ausgestattet. Hierdurch wird ein Aufschieben auch eines vollbeladenen Trolleys in den Anhänger erleichtert.

In einer bevorzugten Ausgestaltung ist der Mittelsteg mittig zwischen den Außenschenkeln angeordnet und die beiden seitlichen Auffahrschienen besitzen einen unterschiedlichen Abstand von dem Mittelsteg.

In einer bevorzugten Ausgestaltung ist eine Sicherungseinrichtung vorgesehen, die geeignet ist, einen auf den Mittelsteg aufgeschobenen Trolley in seiner aufgeschobenen Position wahlweise für einen Transport zu sichern oder für ein Herausschieben aus dem Anhänger freizugeben. Insbesondere bei der Verwendung von Rollen an der Auffahrschiene ist es erforderlich, den aufgeschobenen Trolley vor einem Herunterrollen von dem Mittelsteg zu sichern.

Dies geschieht durch die Sicherungseinrichtung, die den aufgeschobenen Trolley auf dem Mittelsteg sichert.

Das erfindungsgemäße System besteht aus einem erfindungsgemäßen Anhänger und einem erfindungsgemäßen Trolley. Hierbei ist die Neigung der Aufschiebeschiene und die Neigung der Auffahrschiene identisch, so dass der Trolley in seiner horizontalen Position auf die Auffahrschienen des Routenzuganhängers schiebbar ist.

Bei dem System aus Anhänger und Trolley ist das Paar von Auffahrschienen mit dem gleichen Abstand zueinander an dem Anhänger angeordnet, wie das erste und zweite Paar von Aufschiebeschienen an dem Trolley. Abhängig von der Orientierung des Trolleys relativ zu dem Anhänger gelangt entweder das erste Paar von Aufschiebeschienen oder das zweite Paar von Aufschiebeschienen in Eingriff mit dem Paar von Auffahrschienen. Auf diese Weise ist sichergestellt, dass das Paar von Auffahrschienen stets mit einem Paar von Aufschiebeschienen zusammenwirkt, die die passende Orientierung besitzen.

In einer bevorzugten Ausgestaltung des Systems aus Trolley und Anhänger wird der Trolley bei einem Aufschieben auf den Mittelsteg durch die zum Aufnahmeraum weisenden Innenseiten der Außenschenkel des Anhängers geführt. Durch die Anordnung seiner Aufschiebeschienen geht der Trolley bevorzugt in seine Ausgangsposition bei einer Drehung um 180° wieder über. Dies erlaubt es, den Trolley bei Aufschieben durch die Innenseite der Außenschenkel zu führen. Die Führung kann auch alternativ oder zusätzlich durch den Mittelsteg erfolgen, wobei dann die Aufschiebeschienen weiterhin die horizontale Position des Trolleys beim Aufschieben sicherstellen.

Eine bevorzugte Ausgestaltung von Anhänger und Trolley wird nachfolgend anhand der Figuren näher erläutert.
- Fig. 1: zeigt einen erfindungsgemäßen Anhänger sowie einen zugehörigen Trolley in einer perspektivischen Ansicht von der Seite und
- Fig. 2: zeigt eine Detailansicht des aufgeschobenen Trolleys von unten.

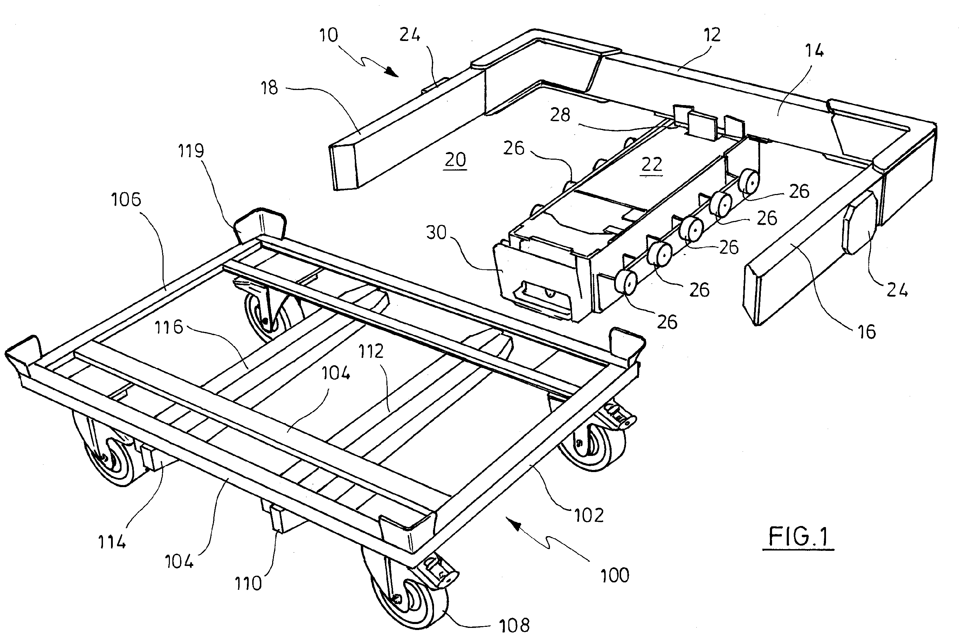

Fig. 1 zeigt einen erfindungsgemäßen Anhänger 10, der einen E-förmigen Rahmen 12 besitzt. Der Rahmen 12 besteht aus einem Längsschenkel 14 und zwei Außenschenkeln 16, 18. Die Außenschenkel 16, 18 sind parallel zueinander ausgerichtet und begrenzen einen Aufnahmebereich 20 für einen Trolley. Mittig zwischen den Außenschenkeln 16, 18 in dem Aufnahmebereich 20 ist ein Mittelsteg 22 vorgesehen. Der Mittelsteg 22 ist an der Längsstrebe 14 angebracht.

Für den Einsatz des Anhängers 10 ist an der Außenseite der Außenschenkel jeweils eine Anhängerkupplung oder eine Deichsel angebracht. In dem dargestellten Ausführungsbeispiel sind die Verankerungsplatten 24 hierfür zu erkennen. Der Anhänger 10 ist unter seinem Mittelsteg 22 mit zwei Laufrädern (nicht dargestellt) ausgestattet. Die Laufräder sind starr in Längsrichtung, also auf der gedachten Verbindungslinie zwischen den Verankerungsplatten 24 angeordnet und können sich unabhängig voneinander für eine Kurvenfahrt drehen.

Seitlich an dem Mittelsteg 22 sind jeweils mehrere Rollen 26 angebracht, die insgesamt eine Auffahrschiene bilden.

An dem Mittelsteg 22 ist ferner ein Betätigungsvorsprung 28 zu erkennen, der nahe der Längsstrebe 14 des Rahmens angeordnet ist. Der Betätigungsvorsprung 28 wirkt mit einem Verriegelungselement 30 am freien Ende des Mittelstegs 22 zusammen. Ein aufgeschobener Trolley auf dem Mittelsteg 22 löst den Betätigungsvorsprung 28 aus, der das Verriegelungselement 30 betätigt, um den Trolley auf dem Mittelsteg 22 zu sichern.

Zum Lösen des Verriegelungselements 30 kann dieses beispielsweise mit dem Fuß heruntergetreten werden.

Fig. 1 zeigt einen erfindungsgemäßen Trolley 100 mit einem viereckigen Rahmen 102. Der Rahmen 102 besitzt vier Längsstreben 104 sowie zwei Querstreben 106. In den Ecken des Rahmens 102 sind jeweils lenkbare Räder 108 vorgesehen. Für die Aufnahme einer zu transportierenden Last, beispielsweise in Form einer Palette, ist der Trolley 100 mit Eckansätzen 119 ausgestattet, die eine zu transportierende Last an dem Rahmen 102 sichern. Auf der Unterseite der Längsstreben 104 und parallel zu den Querstreben 106 des Rahmens 102 sind vier rampenförmige Aufschiebeschienen 110, 112, 114, 116 vorgesehen. Die Aufschiebeschienen 110 - 116 besitzen jeweils eine gleiche Neigung, so dass die Schienen 110 und 114 und 112 und 116 jeweils ein Paar von Aufschiebeschienen bilden. Der Abstand zwischen den Aufschiebeschienen eines Paares 112, 116; 114, 110 ist identisch mit dem Abstand zwischen den Auffahrschienen 26 an dem Mittelsteg 22. Bei einer Drehung des auf dem Boden stehenden Trolleys 100 um 180°, bei der der Rahmen 102 nach der Drehung wieder die Position des Rahmens vor der Drehung einnimmt, gehen die Aufschiebeschienen 110 - 116 ineinander über. Sie vertauschen dabei jedoch die Orientierung ihrer Neigung. Wie in Fig. 1 zu erkennen, besitzen die äußeren Aufschiebeschienen 110, 116 einander entgegengesetzte Neigungen ebenso wie die inneren Aufschiebeschienen 112, 114. Bei einer Drehung des Trolleys um 180° geht die Aufschiebeschiene 110 in die Aufschiebeschiene 116 über, ebenso wie die Aufschiebeschiene 112 in die Aufschiebeschiene 114 übergeht. Bezogen auf die durch die Rollen der Auffahrschiene 26 bedeutet dies, dass der Trolley in beiden Richtungen auf den Mittelsteg des Anhängers aufgeschoben werden kann.

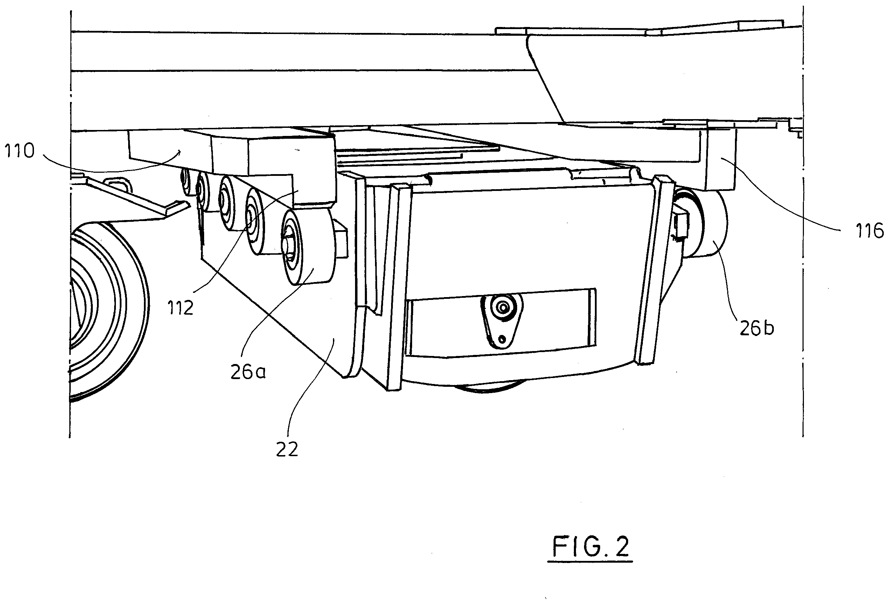

Die Detailansicht in Fig. 2 verdeutlicht die Wirkungsweise, wonach die Rollen 26 der Auffahrschiene an dem Mittelsteg 22 einmal mit der inneren Schiene, beispielsweise der Schiene 112 und auf der gegenüberliegenden Seite des Mittelstegs 22 mit der äußeren Aufschiebeschiene 116 zusammenwirken. Gegenüber Fig. 1 wurde hierbei der Trolley um 180° gedreht. Erreicht wird dies indem die eine Aufschiebeschiene mit den Rollen 26b weiter von dem Mittelsteg beabstandet ist als die gegenüberliegende Auffahrschiene mit ihren Rollen 26a. Wird der Anhänger umgedreht, so wird die Schiene 112 zur inneren Schiene auf der gegenüberliegenden Seite und gelangt nicht in Eingriff mit den Rollen 26b. Vielmehr gelangt die Schiene 110 in Eingriff mit den Rollen 26b, so dass der Trolley wieder mit der korrekten Neigung auf den Mittelsteg 22 aufschiebbar ist.

### Bezugszeichenliste

- 10: Anhänger
- 12: Rahmen
- 14: Längs schenkel
- 16: Außenschenkel
- 18: Außenschenkel
- 20: Aufnahmebereich
- 22: Mittelsteg
- 24: Verankerungsplatten
- 26: Auffahrschiene
- 26a: Rollen anliegend
- 26b: Rollen beabstandet
- 28: Betätigungsvorsprung
- 30: Verriegelungselement
- 100: Trolley
- 102: Rahmen
- 104: Längs streben
- 106: Querstreben
- 108: Räder
- 110: Aufschiebeschiene
- 112: Aufschiebeschiene
- 114: Aufschiebeschiene
- 116: Aufschiebeschiene
- 119: Eckansatz

## Patentansprüche

1. Trolley für einen Anhänger (10) mit einem viereckigen Rahmen (12), der in seinen Ecken Rollen oder Räder (108) aufweist, wobei der Rahmen (12) in einer Querrichtung auf einer Rahmenunterseite mindestens eine geneigt angeordnete Aufschiebeschiene aufweist, die sich über die Breite des Rahmens erstreckt,
**dadurch gekennzeichnet, dass** zwei oder mehr Aufschiebeschienen (110-116) mit entgegengesetzter Neigung vorgesehen sind.

2. Trolley nach Anspruch 1, **dadurch gekennzeichnet, dass** mindestens ein Paar von parallel zueinander und beabstandet voneinander angeordneten Aufschiebeschienen (110-116) vorgesehen ist, wobei die Aufschiebeschienen die gleich Neigung besitzen.

3. Trolley nach Anspruch 2, **dadurch gekennzeichnet, dass** ein erstes Paar und ein zweites Paar von Aufschiebeschienen vorgesehen ist, die eine entgegengesetzte Neigung besitzen.

4. Trolley nach Anspruch 2 oder 3, **dadurch gekennzeichnet, dass** die Aufschiebeschienen beider Paare mittig an dem Trolley angeordnet sind und jedes Paar mit seinen Aufschiebeschienen außermittig angeordnet ist.

5. Trolley nacheinem der Ansprüche 1 bis 4, **dadurch gekennzeichnet, dass** eine oder mehrere der Aufschiebeschienen Rollen aufweisen.

6. Anhänger, insbesondere Routenzuganhänger mit einem E-förmigen Rahmen, der zwei Außenschenkel und einen Mittelsteg aufweist, **dadurch gekennzeichnet, dass** Mittelsteg (22) mindestens eine sich in Querrichtung erstreckende Auffahrschiene mit einer vorbestimmten Neigung besitzt, die, ausgehend von einem freien Ende des Mittelstegs, ansteigt,
**dadurch gekennzeichnet, dass**
die Auffahrschienen einen unterschiedlichen Abstand von einer Mittelposition zwischen den Außenschenkeln (16, 18) besitzen.

7. Anhänger nach Anspruch 6, **dadurch gekennzeichnet, dass** beidseitig von dem Mittelsteg (22) jeweils eine Auffahrschiene vorgesehen ist, die die gleiche Neigung besitzen.

8. Anhänger nach einem der Ansprüche 6 oder 7, **dadurch gekennzeichnet, dass** eine oder beide Auffahrschienen (26) Rollen aufweisen.

9. Anhänger nach einem der Ansprüche 6 bis 8, **dadurch gekennzeichnet, dass** der Mittelsteg mittig zwischen den Außenschenkeln angeordnet ist und die seitlichen Auffahrschienen jeweils einen unterschiedlichen Abstand zu dem Mittelsteg aufweisen.

10. Anhänger nach einem der Ansprüche 6 bis 9, **dadurch gekennzeichnet, dass** eine Sicherungseinrichtung vorgesehen ist, die geeignet ist, einen auf den Mittelsteg geschobenen Trolley in seiner aufgeschobenen Position wahlweise für einen Transport zu sichern oder für ein Herausschieben aus dem Anhänger freizugeben.

11. System aus einem Anhänger nach einem der Ansprüche 6 bis 10 und einem Trolley nach einem der Ansprüche 1 bis 5, **dadurch gekennzeichnet, dass** die Neigung der Aufschiebeschiene der Neigung der Auffahrschiene entspricht und der Trolley in seiner horizontalen Position auf den Mittelsteg des Anhängers aufschiebbar ist.

12. System nach Anspruch 11, **dadurch gekennzeichnet, dass** das Paar von Auffahrschienen den gleichen Abstand wie das erste und zweite Paar von Aufschiebeschienen besitzt und abhängig von der Orientierung des Trolleys relativ zu dem Anhänger entweder das erste Paar von Aufschiebeschienen oder das zweite Paar von Aufschiebeschienen in Eingriff mit dem Paar von Auffahrschienen gelangt.

13. System nach Anspruch 11 oder 12, **dadurch gekennzeichnet, dass** der Trolley bei einem Aufschieben auf den Mittelsteg durch die Innenseite der Außenschenkel des Anhängers geführt ist.

## Claims

1. A trolley for a trailer (10) having a quadrangular frame (12), which has rollers or wheels (108) at its corners, wherein the frame (12) has at least one push-up rail, inclinedly arranged on a lower side of the frame in a transverse direction, which extends across the width of the frame,
**characterised in that** two or more push-up rails (110-116) with opposite inclination are provided.

2. The trolley according to claim 1, **characterised in that** at least one pair of push-up rails (110-116), arranged in parallel to each other and spaced apart from each other are provided, wherein the push-up rails have the same inclination.

3. The trolley according to claim 2, **characterised in that** a first pair and a second pair of push-up rails are provided, which have opposite inclinations.

4. A trolley according to claim 2 or 3, **characterised in that** the push-up rails of both pairs are arranged centrally on the trolley, and each pair is arranged out of centre with its push-up rails.

5. A trolley according to any one of the claims 1 to 4, **characterised in that** one or several of the push-up rails have rollers.

6. A trailer, in particular a tugger train trailer with an E-shaped frame, which has two outer legs and a cross bar, **characterised in that** the cross bar (22) has at least one loading rail, extending in the transverse direction with a predetermined inclination which ascends extending from a free end of the cross bar,
**characterised in that** the loading rails have different distances from a central position between the outer legs (16, 18).

7. The trailer according to claim 6, **characterised in that** one loading rail at a time is provided on both sides of the central bar (22), both having the same inclination.

8. A trailer according to one of the claims 6 or 7, **characterised in that** one or both loading rails (26) have rollers.

9. A trailer according to any one of the claims 6 to 8, **characterised in that** the central bar is arranged centrally between the outer legs, and the lateral loading rails have different distances from the central bar.

10. A trailer according to any one of the claims 6 to 9, **characterised in that** a safety device is provided which is suited to selectively secure a trolley pushed onto the central bar in its pushed-up position for a transportation, or to unblock it in order to push it out of the trailer.

11. A system of a trailer according to any one of the claims 6 to 10 and a trolley according to any one of the claims 1 to 5, **characterised in that** the inclination of the push-up rail corresponds to the inclination of the load rail, and the trolley can be pushed onto the central bar of the trailer in its horizontal position.

12. The system according to claim 11, **characterised in that** the pair of load rails has the same distance like the first and the second pair of push-up rails, and depending on the orientation of the trolley with respect to the trailer, either the first pair of push-up rails or the second pair of push-up rails arrives in engagement with the pair of load rails.

13. A system according to claim 11 or 12, **characterised in that** the trolley is guided through the inner side of the outer legs of the trailer when it is being pushed up onto the central bar.

## Revendications

1. Trolley pour une remorque (10) avec un cadre quadrangulaire (12), qui a des rouleaux ou roues (108) dans ses coins, le cadre (12) ayant au moins un rail à pousser arrangé de manière inclinée sur un coté inférieur du cadre dans une direction transversale, qui s'étend à travers la largeur du cadre,
**caractérisé en ce que** deux ou plus rails à pousser (110-116) avec des inclinations opposées sont prévus.

2. Trolley selon la revendication 1, **caractérisé en ce qu'**au moins une paire de rails à pousser (110-116), arrangés en parallèle les uns aux autres et espacés les uns des autres est prévue, les rails à pousser ayant la même inclination.

3. Trolley selon la revendication 2, **caractérisé en ce qu'**une première paire et une deuxième paire de rails à pousser sont prévues, qui ont des inclinations opposées.

4. Trolley selon la revendication 2 ou 3, **caractérisé en ce que** les rails à pousser des deux paires sont arrangés au centre sur le trolley, et chaque paire est arrangée de façon excentrique avec ses rails à pousser.

5. Trolley selon l'une quelconque des revendications 1 à 4, **caractérisé en ce qu'**une ou plusieurs des rails à pousser ont des rouleaux.

6. Remorque, notamment remorque pour un train de route à traction, avec un cadre en forme d'E, qui a deux branches d'extrémité et une entretoise centrale, **caractérisée en ce que** l'entretoise centrale (22) a au moins une rampe de chargement, s'étendant dans la direction transversale avec une inclination prédéterminée qui monte à partir d'une extrémité libre de l'entretoise centrale,
**caractérisé en ce que** les rampes de chargement ont des distances différentes d'une position centrale entre les branches d'extrémité (16, 18).

7. Remorque selon la revendication 6, **caractérisée en ce qu'**une rampe de chargement est à la fois prévue sur les deux cotés de l'entretoise centrale (22), les deux ayant la même inclination.

8. Remorque selon une des revendications 6 ou 7, **caractérisée en ce qu'**une ou les deux rampes de chargement (26) ont des rouleaux.

9. Remorque selon l'une quelconque des revendications 6 à 8, **caractérisée en ce que** l'entretoise centrale est arrangée au centre entre les branches d'extrémité, et les rampes de chargement ont des distances différentes de l'entretoise centrale.

10. Remorque selon l'une quelconque des revendications 6 à 9, **caractérisée en ce qu'**un dispositif de sécurité est prévu qui est adapté à sélectivement sauvegarder un trolley poussé sur l'entretoise centrale dans sa position poussée pour un transport, ou à le débloquer afin de le pousser au dehors de la remorque.

11. Système d'une remorque selon l'une quelconque des revendications 6 à 10 et un trolley selon l'une quelconque des revendications 1 à 5, **caractérisé en ce que** l'inclination du rail à pousser correspond à l'inclination de la rampe de chargement, et le trolley peut être poussé sur l'entretoise centrale de la remorque dans sa position horizontale.

12. Système selon la revendication 11, **caractérisé en ce que** la paire de rampes de chargement a la même distance comme la première et la deuxième paire de rails à pousser, et en fonction de l'orientation du trolley par rapport à la remorque, ou la première paire de rails à pousser ou bien la deuxième paire de rails à pousser arrive en engagement avec la paire de rampes de chargement.

13. Système selon la revendication 11 ou 12, **caractérisé en ce que** le trolley est guidé à travers le coté intérieur des branches d'extrémité de la remorque quand il est poussé sur l'entretoise centrale.
